# EUROPEAN PATENT APPLICATION

(11) **EP 4 318 683 A1**
(43) Date of publication of application: **07.02.2024**
(21) Application number: 21933226.9
(22) Date of filing: 15.11.2021
(51) Int. Cl.: H01M 4/68, H01M 10/04, H01M 10/058, H01M 10/12, H01M 10/18, H01M 50/449, H01M 50/463

(54) **BIPOLAR STORAGE BATTERY**

(30) Priority: 26.03.2021 JP 2021053368
(71) Applicant: The Furukawa Battery Co., Ltd., Yokohama-shi, Kanagawa-ken 240-0006 (JP); FURUKAWA ELECTRIC CO., LTD., Tokyo 100-8322 (JP)
(72) Inventor: TAINAKA Ryo, Jyoban-shimofunao-machi, Iwaki-shi, Fukushima 972- 8501 (JP); YOSHIDA Hideaki, Nikko-shi, Tochigi 321-2336 (JP); SHIBATA Satoshi, Jyoban-shimofunao-machi, Iwaki-shi, Fukushima 972- 8501 (JP); NAKAKITA Naoki, Jyoban-shimofunao-machi, Iwaki-shi, Fukushima 972- 8501 (JP)
(74) Representative: Grünecker Patent- und Rechtsanwälte PartG mbB
(86) International application number: PCT/JP2021/041939
(87) International publication number: WO 2022/201628

(57) **Abstract**

To suppress local use of active material during charging and discharging to achieve uniform use of active material in a cell and even if unevenness in use of active material due to local use occurs, tolerate the unevenness to extend the life of the storage battery. A bipolar storage battery includes: cell members (110) arranged with spacing in a stacked manner, each of the cell members (110) including a positive electrode (111), a negative electrode (112), and an electrolyte layer interposed between the positive electrode (111) and the negative electrode (112); and space-forming members (120) forming a plurality of spaces individually accommodating the plurality of cell members (110), in which a value obtained by dividing the distance between a positive active material layer (111b) and a negative active material layer (112b) placed in a position facing the positive active material layer (111b) by the sum of the thickness of the positive active material layer (111b) and the thickness of the negative active material layer (112b) is 1.1 or more.

## Description

### Technical Field

Embodiments of the present invention relate to a bipolar storage battery.

### Background Art

These days, the number of power generation facilities utilizing natural energy such as sunlight and wind power is increasing. In such a power generation facility, the amount of power generated cannot be controlled, and thus a storage battery is used to level the power load. That is, when the amount of power generated is larger than the consumption, the storage battery is charged with the difference; on the other hand, when the amount of power generated is smaller than the consumption, the storage battery is discharged of the difference. As the storage battery described above, a lead-acid storage battery is frequently used from the viewpoint of economic efficiency, safety, etc. As such a conventional lead-acid storage battery, for example, one described in PTL 1 below is known.

The lead-acid storage battery described in PTL 1 includes bipolar plates in each of which a positive active material layer and a negative active material layer are provided on one surface and the other surface of a conductive metal base material. The bipolar plates are sandwiched between a pair of end plates, and a separator is provided between each pair of adjacent bipolar plates. The lead-acid storage battery used for power storage systems like those described above needs to have life properties of capability of withstanding long-term operation in view of its uses.

### Citation List

### Patent Literature

PTL 1: JP H06-349519 A

### Summary of Invention

### Technical Problem

However, various conditions such as environments in actual operation and performance of storage batteries are different. Therefore, there may be a case where active material is locally used due to various factors such as the potential distribution of the substrate and the concentration difference of the electrolytic solution. If such a state continues, a state called softening occurs, in which the life of the storage battery is shortened, and the life of the storage battery may end early.

An object of the present invention is to provide a bipolar storage battery in which local use of active material during charging and discharging is suppressed to achieve uniform use of active material in a cell and even if unevenness in use of active material due to local use occurs, the unevenness can be tolerated to extend the life of the storage battery.

### Solution to Problem

A bipolar storage battery according to one aspect of the present invention includes cell members arranged with spacing in a stacked manner, each of the cell members including a positive electrode including a positive current collector and a positive active material layer, a negative electrode including a negative current collector and a negative active material layer, and electrolyte layers interposed between the positive electrode and the negative electrode, and space-forming members forming a plurality of spaces individually accommodating the plurality of cell members, each of the space-forming members including a substrate and a frame body, the substrate covering at least one of a side of the positive electrode and a side of the negative electrode of the cell member, the frame body surrounding a side surface of the cell member. A value obtained by dividing the distance between a positive active material layer and a negative active material layer placed in a position facing the positive active material layer by the sum of the thickness of the positive active material layer and the thickness of the negative active material layer is 1.1 or more.

### Advantageous Effects of Invention

According to the present invention, a bipolar storage battery according to one aspect of the present invention includes cell members arranged with spacing in a stacked manner, each of the cell members including a positive electrode including a positive current collector and a positive active material layer, a negative electrode including a negative current collector and a negative active material layer, and electrolyte layers interposed between the positive electrode and the negative electrode, and space-forming members forming a plurality of spaces individually accommodating the plurality of cell members, each of the space-forming members including a substrate and a frame body, the substrate covering at least one of a side of the positive electrode and a side of the negative electrode of the cell member, the frame body surrounding a side surface of the cell member. A value obtained by dividing the distance between a positive active material layer and a negative active material layer placed in a position facing the positive active material layer by the sum of the thickness of the positive active material layer and the thickness of the negative active material layer is 1.1 or more. By adapting such a configuration, local use of active material during charging and discharging can be suppressed to achieve uniform use of active material in a cell and even if unevenness in use of active material due to local use occurs, the unevenness can be tolerated to extend the life of the storage battery.

### Brief Description of Drawings

FIG. 1 is a cross-sectional view illustrating a structure of a bipolar storage battery according to a first embodiment of the present invention; and
FIG. 2 is an enlarged cross-sectional view illustrating part of a structure of a bipolar storage battery according to a second embodiment of the present invention in an enlarged manner.

### Description of Embodiments

Hereinafter, an embodiment of the present invention will be described in detail with reference to the drawings. Note that the embodiments described below illustrate an example of the present invention. In addition, various changes or improvements can be added to the embodiments, and a mode to which such changes or improvements are added can also be included in the present invention. These embodiments and modifications thereof are included in the scope and gist of the invention, and are included in the scope of the invention described in the claims and its equivalents. Note that, hereinafter, a lead-acid storage battery will be described as an example from among various storage batteries.

### (First embodiment)

### [Overall configuration]

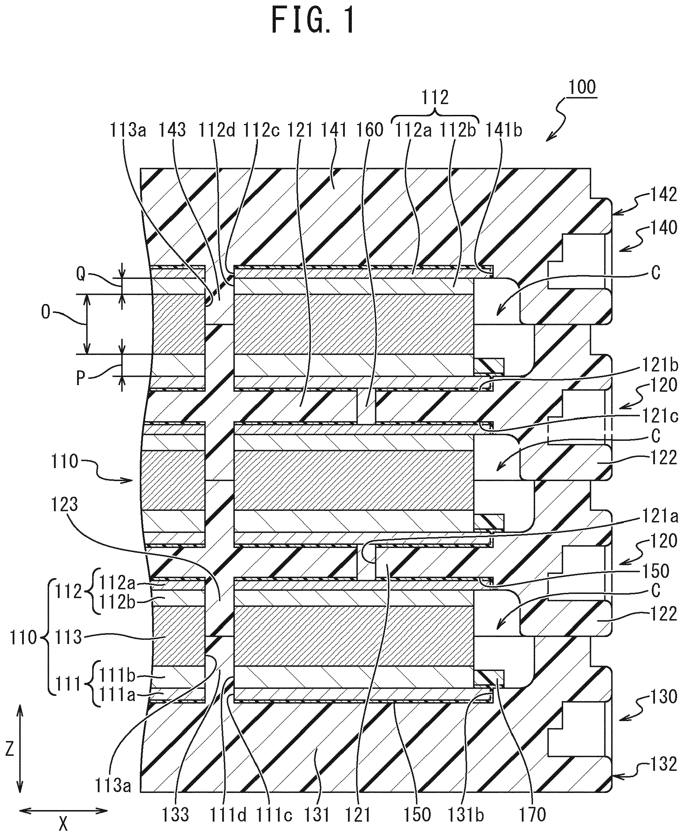

First, an overall configuration of a bipolar lead-acid storage battery in a first embodiment is described. FIG. 1 is a cross-sectional view illustrating a structure of a bipolar lead-acid storage battery 100 according to the first embodiment of the present invention.

As illustrated in FIG. 1, the bipolar lead-acid storage battery 100 of the first embodiment of the present invention includes a plurality of cell members 110, a plurality of bipolar plates (space-forming members) 120, a first end plate (space-forming member) 130, a second end plate (space-forming member) 140, and a cover plate 170.

Here, although FIG. 1 illustrates a bipolar lead-acid storage battery 100 in which three cell members 110 are stacked, the number of cell members 110 is determined by battery design. The number of bipolar plates 120 is determined according to the number of cell members 110.

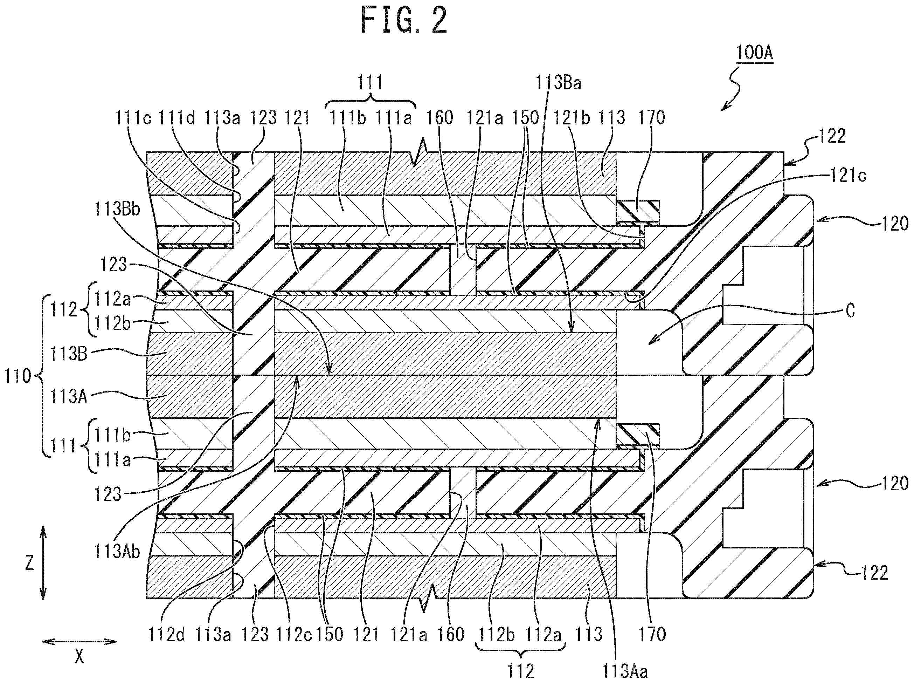

In the following, as illustrated in FIG. 1 and FIG. 2 described later, the stacking direction of the cell members 110 is defined as a Z-direction (the up-down direction in FIG. 1 or FIG. 2), and directions perpendicular to the Z-direction and perpendicular to each other are defined as an X-direction and a Y-direction.

The cell member 110 includes a positive electrode 111, a negative electrode 112, and a separator (electrolyte layer) 113. The positive electrode 111 includes positive lead foil 111a and a positive active material layer 111b. The negative electrode 112 includes negative lead foil 112a and a negative active material layer 112b.

The separator 113 is impregnated with an electrolytic solution. The separator 113 is interposed between the positive electrode 111 and the negative electrode 112. In the cell member 110, the positive lead foil 111a, the positive active material layer 111b, the separator 113, the negative active material layer 112b, and the negative lead foil 112a are stacked in this order.

The dimensions in the X-direction and the Y-direction of the positive lead foil 111a are larger than the dimensions in the X-direction and the Y-direction of the positive active material layer 111b. Similarly, the dimensions in the X-direction and the Y-direction of the negative lead foil 112a are larger than the dimensions in the X-direction and the Y-direction of the negative active material layer 112b. For the dimension in the Z-direction (thickness), the positive lead foil 111a is larger (thicker) than the negative lead foil 112a, and the positive active material layer 111b is larger (thicker) than the negative active material layer 112b.

The plurality of cell members 110 are arranged with spacing in a stacked manner in the Z-direction, and substrates 121 of the bipolar plates 120 are arranged in the portions of spacing. That is, the plurality of cell members 110 are stacked in a state where the substrate 121 of a bipolar plate 120 is sandwiched between cell members 110.

Thus, the plurality of bipolar plates 120, the first end plate 130, and the second end plate 140 are space-forming members for forming a plurality of spaces (cells) C individually accommodating the plurality of cell members 110.

That is, the bipolar plate 120 is a space-forming member including a substrate 121 covering both the positive electrode side and the negative electrode side of cell members 110 and having a rectangular planar shape and a frame body 122 surrounding side surfaces of the cell members 110 and covering the four end surfaces of the substrate 121.

As illustrated in FIG. 1, the bipolar plate 120 further includes a column 123 perpendicularly protruding from both surfaces of the substrate 121. The number of columns 123 protruding from each surface of the substrate 121 may be one or plural.

The substrate 121, the frame body 122, and the column 123 that constitute the bipolar plate 120 are integrally formed of, for example, the thermoplastic resin. Examples of the thermoplastic resin forming the bipolar plate 120 include acrylonitrile-butadiene-styrene copolymer (ABS resin) and polypropylene. These thermoplastic resins are excellent in moldability and also excellent in sulfuric acid resistance. Hence, even when the electrolytic solution comes into contact with the bipolar plate 120, decomposition, deterioration, corrosion, and the like hardly occur in the bipolar plate 120.

In the Z-direction, the dimension of the frame body 122 is larger than the dimension (thickness) of the substrate 121, and the dimension between the protrusion end surfaces of the column 123 is the same as the dimension of the frame body 122. The plurality of bipolar plates 120 are stacked such that frame bodies 122 and columns 123 are in contact with each other, and thereby a space C is formed between a substrate 121 and a substrate 121. The dimension in the Z-direction of the space C is held by columns 123 in contact with each other.

Through holes 111c, 111d, 112c, 112d, and 113a allowing the column 123 to penetrate are formed in the positive lead foil 111a, the positive active material layer 111b, the negative lead foil 112a, the negative active material layer 112b, and the separator 113, respectively.

The substrate 121 of the bipolar plate 120 has a plurality of through holes 121a penetrating the plate surface. A first recess 121b is formed on one surface of the substrate 121, and a second recess 121c is formed on the other surface. The depth of the first recess 121b is deeper than the depth of the second recess 121c. The dimensions in the X-direction and the Y-direction of the first recess 121b and the second recess 121c are made to correspond to the dimensions in the X-direction and the Y-direction of the positive lead foil 111a and the negative lead foil 112a.

The substrate 121 of the bipolar plate 120 is placed between adjacent cell members 110 in the Z-direction. The positive lead foil 111a of the cell member 110 is placed in the first recess 121b of the substrate 121 of the bipolar plate 120 via an adhesive layer 150.

On an outer edge portion of the positive lead foil 111a, a cover plate 170 for covering the outer edge portion is provided. The cover plate 170 is a thin plate-shaped frame body, and has a rectangular inner shape line and a rectangular outer shape line. An inner edge portion of the cover plate 170 overlaps with an outer edge portion of the positive lead foil 111a, and an outer edge portion of the cover plate 170 overlaps with a peripheral edge portion of the first recess 121b of one surface of the substrate 121.

That is, the rectangle forming the inner shape line of the cover plate 170 is smaller than the rectangle forming the outer shape line of the positive active material layer 111b. Further, the rectangle forming the outer shape line of the cover plate 170 is larger than the rectangle forming the opening plane of the first recess 121b.

The adhesive layer 150 runs around from an end surface of the positive lead foil 111a to an outer edge portion on the opening side of the first recess 121b, and is placed between an inner edge portion of the cover plate 170 and an outer edge portion of the positive lead foil 111a. The adhesive layer 150 is placed also between an outer edge portion of the cover plate 170 and one surface of the substrate 121.

That is, the cover plate 170 is fixed by the adhesive layer 150 over a peripheral edge portion of the first recess 121b of one surface of the substrate 121 and an outer edge portion of the positive lead foil 111a. Thereby, the outer edge portion of the positive lead foil 111a is covered with the cover plate 170 also in a boundary portion with the peripheral edge portion of the first recess 121b.

The negative lead foil 112a of the cell member 110 is placed in the second recess 121c of the substrate 121 of the bipolar plate 120 via an adhesive layer 150. Although not illustrated in FIG. 1, also an outer edge portion of the negative lead foil 112a may be covered with a cover plate similar to the cover plate 170 covering an outer edge portion of the positive lead foil 111a.

A conduction body 160 is placed in the through hole 121a of the substrate 121 of the bipolar plate 120. Both end surfaces of the conduction body 160 are in contact with and coupled to the positive lead foil 111a and the negative lead foil 112a. That is, the positive lead foil 111a and the negative lead foil 112a are electrically connected by the conduction body 160. As a result, all the plurality of cell members 110 are electrically connected in series.

As illustrated in FIG. 1, the first end plate 130 is a space-forming member including a substrate 131 covering the positive electrode side of the cell member 110 and a frame body 132 surrounding a side surface of the cell member 110. Further, the first end plate 130 includes a column 133 vertically protruding from one surface of the substrate 131 (a surface facing the substrate 121 of the bipolar plate 120 placed most on the positive electrode side).

The planar shape of the substrate 131 is a rectangle, and the four end surfaces of the substrate 131 are covered with the frame body 132. The substrate 131, the frame body 132, and the column 133 are integrally formed of, for example, the thermoplastic resin described above. Although the number of columns 133 protruding from one surface of the substrate 131 may be one or plural, the number of columns 133 is a number corresponding to the number of columns 123 of the bipolar plate 120 to be brought into contact with the columns 133.

In the Z-direction, the dimension of the frame body 132 is larger than the dimension (thickness) of the substrate 131, and the dimension between the protrusion end surfaces of the column 133 is the same as the dimension of the frame body 132. The first end plate 130 is stacked such that the frame body 132 and the column 133 are in contact with the frame body 122 and the column 123 of the bipolar plate 120 placed most on the outside (the positive electrode side).

Thereby, a space C is formed between the substrate 121 of the bipolar plate 120 and the substrate 131 of the first end plate 130. The dimension in the Z-direction of the space C is held by the column 123 of the bipolar plate 120 and the column 133 of the first end plate 130 in contact with each other.

Through-holes 111c, 111d, and 113a allowing the column 133 to penetrate are formed in the positive lead foil 111a, the positive active material layer 111b, and the separator 113 of the cell member 110 placed most on the outside (the positive electrode side), respectively.

A recess 131b is formed on one surface of the substrate 131 of the first end plate 130. The dimensions in the X-direction and the Y-direction of the recess 131b are made to correspond to the dimensions in the X-direction and the Y-direction of the positive lead foil 111a.

The positive lead foil 111a of the cell member 110 is placed in the recess 131b of the substrate 131 of the first end plate 130 via an adhesive layer 150. Like on the substrate 121 of the bipolar plate 120, the cover plate 170 is fixed to one surface side of the substrate 131 by the adhesive layer 150. Thereby, the outer edge portion of the positive lead foil 111a is covered with the cover plate 170 also in a boundary portion with the peripheral edge portion of the recess 131b.

Further, the first end plate 130 includes a positive electrode terminal, which is not illustrated in FIG. 1, electrically connected to the positive lead foil 111a in the recess 131b.

The second end plate 140 is a space-forming member including a substrate 141 covering the negative electrode side of the cell member 110 and a frame body 142 surrounding a side surface of the cell member 110. Further, the second end plate 140 includes a column 143 vertically protruding from one surface of the substrate 141 (a surface facing the substrate 121 of the bipolar plate 120 placed most on the negative electrode side).

The planar shape of the substrate 141 is a rectangle, and the four end surfaces of the substrate 141 are covered with the frame body 142. The substrate 141, the frame body 142, and the column 143 are integrally formed of, for example, the thermoplastic resin described above. Although the number of columns 143 protruding from one surface of the substrate 141 may be one or plural, the number of columns 133 is a number corresponding to the number of columns 123 of the bipolar plate 120 to be brought into contact with the columns 143.

In the Z-direction, the dimension of the frame body 142 is larger than the dimension (thickness) of the substrate 131, and the dimension between the protrusion end surfaces of the two column 143 is the same as the dimension of the frame body 142. The second end plate 140 is stacked such that the frame body 142 and the column 143 are in contact with the frame body 122 and the column 123 of the bipolar plate 120 placed most on the outside (the negative electrode side).

Thereby, a space C is formed between the substrate 121 of the bipolar plate 120 and the substrate 141 of the second end plate 140. The dimension in the Z-direction of the space C is held by the column 123 of the bipolar plate 120 and the column 143 of the second end plate 140 in contact with each other.

Through-holes 112c, 112d, and 113a allowing the column 143 to penetrate are formed in the negative lead foil 112a, the negative active material layer 112b, and the separator 113 of the cell member 110 placed most on the outside (the negative electrode side), respectively.

A recess 141b is formed on one surface of the substrate 141 of the second end plate 140. The dimensions in the X-direction and the Y-direction of the recess 141b are made to correspond to the dimensions in the X-direction and the Y-direction of the negative lead foil 112a.

The negative lead foil 112a of the cell member 110 is placed in the recess 141b of the substrate 141 of the second end plate 140 via an adhesive layer 150. Further, the second end plate 140 includes a negative electrode terminal, which is not illustrated in FIG. 1, electrically connected to the negative lead foil 112a in the recess 141b.

Here, when joining adjacent bipolar plates 120, the first end plate 130 and the adjacent bipolar plate 120, or the second end plate 140 and the adjacent bipolar plate 120, for example, various welding methods such as vibration welding, ultrasonic welding, and hot plate welding can be employed. Among the welding methods, vibration welding is performed by vibrating surfaces to be joined while pressurizing the surfaces at the time of joining, and has a fast cycle of welding and good reproducibility. Therefore, vibration welding is more preferably used.

The objects to be welded include not only frame bodies placed in facing positions on adjacent bipolar plates 120, the first end plate 130, and the second end plate 140 but also the columns.

Although not illustrated in the drawing, a notch forming an injection hole for introducing an electrolytic solution into the space C is formed in one of the four end surfaces of the frame body. For example, in the case where notches are formed on a side surface of the frame body existing on the right side in the drawing, the notches have shapes penetrating the frame body in the X-direction and recessed in semicircular arc shapes from both end surfaces in the Z-direction of the frame body. The notch does not participate in the joint structure described above, and when the joint structure described above is being formed by vibration welding, a circular injection hole is formed by facing notches.

### [Manufacturing method]

The bipolar lead-acid storage battery 100 of this embodiment can be manufactured by, for example, a method including the steps described below.

### <Step of producing bipolar plate equipped with positive lead foil and negative lead foil>

First, the substrate 121 of the bipolar plate 120 is put on a work table with the first recess 121b side faced upward. The adhesive 150 is applied to the first recess 121b, and the positive lead foil 111a is put in the first recess 121b. At this time, the column 123 of the bipolar plate 120 is passed through the through hole 111c of the positive lead foil 111a. The adhesive 150 is cured to attach the positive lead foil 111a to one surface of the substrate 121.

Next, the substrate 121 is put on the work table with the second recess 121c side faced upward, and the conduction body 160 is inserted into the through hole 121a. Then, the adhesive 150 is applied to the second recess 121c, and the negative lead foil 112a is put in the second recess 121c. At this time, the column 123 of the bipolar plate 120 is passed through the through hole 112c of the negative lead foil 112a. The adhesive 150 is cured to attach the negative lead foil 112a to the other surface of the substrate 121.

Next, the substrate 121 is put on the work table with the first recess 121b side faced upward. The adhesive 150 is applied onto an outer edge portion of the positive lead foil 111a and the upper surface of the substrate 121 forming an edge portion of the first recess 121b, the cover plate 170 is put on the adhesive 150, and the adhesive 150 is cured. Thereby, the cover plate 170 is fixed over the outer edge portion of the positive lead foil 111a and a portion of the substrate 121 continuing on the outside of the outer edge portion (a peripheral edge portion of the first recess 121b).

Next, resistance welding is performed to connect the conduction body 160, the positive lead foil 111a, and the negative lead foil 112a. Thus, a bipolar plate 120 equipped with positive lead foil and negative lead foil is obtained. A necessary number of bipolar plates 120 equipped with positive lead foil and negative lead foil are prepared.

### <Step of producing end plate equipped with positive lead foil>

The substrate 131 of the first end plate 130 is put on a work table with the recess 131b side faced upward. The adhesive 150 is applied to the recess 131b, the positive lead foil 111a is put in the recess 131b, and the adhesive 150 is cured. At this time, the column 133 of the end plate 130 is passed through the through hole 111c of the positive lead foil 111a. The adhesive 150 is cured to attach the positive lead foil 111a to one surface of the substrate 131.

Next, the adhesive 150 is applied onto an outer edge portion of the positive lead foil 111a and the upper surface of the substrate 131 forming an edge portion of the recess 131b, the cover plate 170 is put on the adhesive 150, and the adhesive 150 is cured. Thereby, the cover plate 170 is fixed over the outer edge portion of the positive lead foil 111a and a portion of the substrate 131 continuing on the outside of the outer edge portion. Thus, an end plate equipped with positive lead foil is obtained.

### <Step of producing end plate equipped with negative lead foil>

The substrate 141 of the second end plate 140 is put on a work table with the recess 141b side faced upward. The adhesive 150 is applied to the recess 141b, the negative lead foil 112a is put in the recess 141b, and the adhesive 150 is cured. At this time, the column 143 of the second end plate 140 is passed through the through hole 112c of the negative lead foil 112a. The adhesive 150 is cured to obtain the second end plate 140 with the negative lead foil 112a attached to one surface of the substrate 141.

### <Step of stacking and joining plates>

First, the first end plate 130 to which the positive lead foil 111a and the cover plate 170 are fixed is put on a work table with the positive lead foil 111a faced upward. The positive active material layer 111b is put in the cover plate 170, and is put on the positive lead foil 111a. At this time, the column 133 of the first end plate 130 is passed through the through hole 111d of the positive active material layer 111b. Next, the separator 113 and the negative active material layer 112b are put on the positive active material layer 111b.

Next, on the first end plate 130 in this state, the negative lead foil 112a side of the bipolar plate 120 equipped with positive lead foil and negative lead foil is put to be faced downward. At this time, the column 123 of the bipolar plate 120 is passed through the through hole 113a of the separator 113 and the through hole 112d of the negative active material layer 112b, and is put on the column 133 of the first end plate 130. Further, the frame body 122 of the bipolar plate 120 is put on the frame body 132 of the first end plate 130.

In this state, the first end plate 130 is fixed, and vibration welding is performed while the bipolar plate 120 is vibrated in a diagonal direction of the substrate 121. Thereby, the frame body 122 of the bipolar plate 120 is joined onto the frame body 132 of the first end plate 130. Further, the column 123 of the bipolar plate 120 is joined onto the column 133 of the first end plate 130.

As a result, the bipolar plate 120 is joined onto the first end plate 130, and the cell member 110 is placed in the space C formed by the first end plate 130 and the bipolar plate 120. The positive lead foil 111a is exposed on the upper surface of the bipolar plate 120.

Next, the positive active material layer 111b, the separator 113, and the negative active material layer 112b are put in this order on the coupled body thus obtained in which the bipolar plate 120 is joined onto the first end plate 130. After that, another bipolar plate 120 equipped with positive lead foil and negative lead foil is put with the negative lead foil 112a side faced downward.

In this state, the coupled body is fixed, and vibration welding is performed while the other bipolar plate 120 equipped with positive lead foil and negative lead foil is vibrated in a diagonal direction of the substrate 121. This vibration welding step is continually performed until a necessary number of bipolar plates 120 are joined onto the first end plate 130.

Finally, the positive active material layer 111b, the separator 113, and the negative active material layer 112b are put in this order on the uppermost bipolar plate 120 of the coupled body in which all the bipolar plates 120 are joined. After that, the second end plate 140 is further put with the negative lead foil 112a side faced downward.

In this state, the coupled body is fixed, and vibration welding is performed while the second end plate 140 is vibrated in a diagonal direction of the substrate 141. Thereby, the second end plate 140 is joined onto the uppermost bipolar plate 120 of the coupled body in which all the bipolar plates 120 are joined.

Here, the bipolar lead-acid storage battery 100 in the first embodiment of the present invention has the following relationship between the distance between a positive active material layer 111b and a negative active material layer 112b placed in a position facing the positive active material layer 111b, and the thickness of the positive active material layer 111b and the thickness of the negative active material layer 112b.

That is, a value obtained by dividing the distance between a positive active material layer 111b and a negative active material layer 112b placed in a position facing the positive active material layer 111b by the sum of the thickness of the positive active material layer 111b and the thickness 112b of the negative active material layer is 1.1 or more.

This will now be described using reference signs indicated in FIG. 1; the distance between a positive active material layer 111b and a negative active material layer 112b placed in a position facing the positive active material layer 111b is represented by reference sign O. In other words, the distance represented by reference sign O can also be said to be the distance from the outermost surface of the positive active material layer 111b to the outermost surface of the negative active material layer.

The thickness of the positive active material layer 111b is denoted by reference sign P, and the thickness of the negative active material layer 112b is denoted by reference sign Q. At this time, a relationship among the three is set such that O/(P + Q) ≥ 1.1. More preferably, the value in the above relationship is 2.5 or less.

Here, the reason why the value in the above relationship is set as above is that, if the above value is 1 or less, bias occurs in the use of active material in various sites of the cell C, the current flow and the voltage distribution in the plane are biased, and uniform use of active material in the cell cannot be achieved. On the other hand, if the above value is 2.5 or more, effects like those described above are leveled off, and the volume of the cell C is increased and accordingly the energy density per volume in the cell C is reduced; hence, this is not preferable.

### <Step of liquid injection and chemical conversion>

In the step of stacking and joining plates described above, a joint structure based on vibration welding of facing surfaces of frame bodies is formed, and a circular injection hole is formed in, for example, the position of each space C on one end surface in the X-direction of the bipolar lead-acid storage battery 100 by notches of the facing frame bodies. A predetermined amount of an electrolytic solution is injected into each space C through the injection hole, and the separator 113 is impregnated with the electrolytic solution. Then, chemical conversion is performed under predetermined conditions, and thereby the bipolar lead-acid storage battery 100 can be produced.

The injection hole may be formed by providing a notch in the frame body in advance as described above, or may be formed by using a drill or the like after joining frame bodies.

### (Examples)

The present invention will now be described more specifically by showing Examples and Comparative Examples. First, the configuration of a bipolar lead-acid storage battery used as each of Examples and Comparative Examples was set as follows.

That is, the bipolar lead-acid storage battery includes: a plurality of cell members each including a positive electrode including a positive active material layer, a negative electrode including a negative active material layer, and an electrolytic layer interposed between the positive electrode and the negative electrode; and a plurality of frame units forming a plurality of spaces (cells) individually accommodating the plurality of cell members. The frame unit is composed of a substrate surrounding at least one of the positive electrode side and the negative electrode side of the cell member and a frame surrounding the side surface of the cell member. The frame unit is formed of resin.

The cell members and the substrates of the frame units described above are alternately stacked, and the plurality of cell members are electrically connected in series such that the voltage is 12 V. Surfaces of adjacent frame units in contact with each other are joined via a joining material made of metal. A separator is placed in the electrolytic layer described above. As the separator, an AGM separator manufactured by Nippon Sheet Glass Co., Ltd. was used.

Using a 12-V bipolar lead-acid storage battery like that described above, the capacity test and the life test shown below were performed.

First, a capacity test was performed, and the result of a 10-hour rate capacity test was taken as the battery capacity. The capacity test was performed by putting the battery in a water bath at 25°C ± 2°C. As a specific condition, discharging (-4.5 A) is performed at 0.1 C with respect to 45 Ah, which is the rated capacity of the battery. Discharging is performed at a 10-hour rate current until the terminal voltage of the battery drops to 1.8 V/cell, and the discharge duration is recorded. The 10-hour rate capacity was obtained from the discharge current and the discharge duration.

On the other hand, based on the result of the capacity test, a life test was performed in a pattern in which discharging and charging were repeated with the depth of discharge, which is the ratio of the amount of discharge to the discharge capacity, set to 70% with respect to the rated capacity. Specifically, the pattern is as follows.

That is, first, a bipolar lead-acid storage battery in a fully charged state is prepared. The bipolar lead-acid storage battery is discharged at a current value of 0.1 C with respect to the 10-hour rate rated capacity obtained in the capacity test. Since the depth of discharge is set to 70% as described above, the discharge time is set to 7 hours.

Then, constant current-constant voltage charging (CC-CV charge) is performed. Specifically, charging is performed at a current value of 0.1 C with respect to the 10-hour rate rated capacity, and when the terminal voltage of the battery reaches 2.45 V/cell, constant voltage charging is performed. Then, charging is performed until the amount of charged electricity reaches 1040 of the amount of discharged electricity. The discharging and the charging are taken as one cycle, and this cycle is repeated 1000 times.

After that, the bipolar lead-acid storage battery is disassembled to extract the positive active material. The extracted positive active material is washed with water and dried, and the positive active material is divided into four in the up-down direction.

Then, the crystallite size of βPbO₂ is found in various sites of the positive active material, and the differences are measured. Since the active material undergoes grain growth in accordance with charging and discharging, if the active material is locally used, grain growth progresses more in this portion, and the crystallite size of βPbO₂ increases. Thus, when there is a difference of 100 Å (angstroms) or more in the crystallite size of βPbO₂ between sites, it is determined that the active material is locally used, and the determination was set to unsuitable (indicated by "×" in the following table). On the other hand, when a difference of 100 Å (angstroms) or more was not observed, it was determined that the active material was not locally used, and the determination was set to suitable (indicated by "o" in the following table).

**[Table 1]**

| | O | P | Q | | |
|---|---|---|---|---|---|
| | Distance between PAM-NAM [mm] | PAM thickness [mm] | NAM thickness [mm] | o/(P+Q) | Determination |
| Comparative Example 1 | 1 | 1 | 1 | 0.50 | × |
| Comparative Example 2 | 2 | 1 | 1 | 1.00 | × |
| Example 1 | 3 | 1 | 1 | 1.50 | ○ |
| Comparative Example 3 | 3 | 2 | 1 | 1.00 | × |
| Comparative Example 4 | 3 | 1 | 2 | 1.00 | × |
| Example 2 | 3 | 1.5 | 1 | 1.20 | ○ |
| Example 3 | 3 | 1 | 1.5 | 1.20 | ○ |
| Comparative Example 5 | 4 | 3 | 1 | 1.00 | × |
| Example 4 | 4 | 2 | 1 | 1.33 | ○ |
| Example 5 | 4 | 1 | 1 | 2.00 | ○ |
| Example 6 | 4 | 1 | 0.5 | 2.67 | ○ |
| Example 7 | 5 | 1 | 1 | 2.50 | ○ |
| Example 8 | 5 | 2 | 1 | 1.67 | ○ |
| Example 9 | 5 | 3 | 1 | 1.25 | ○ |
| Comparative Example 6 | 5 | 4 | 1 | 1.00 | × |
| Comparative Example 7 | 5 | 3 | 2 | 1.00 | × |
| Example 10 | 7.5 | 2 | 1 | 2.50 | ○ |
| Example 11 | 7.5 | 2 | 2 | 1.88 | ○ |
| Example 12 | 10 | 2.5 | 1.5 | 2.50 | ○ |
| Example 13 | 10 | 2 | 1.5 | 2.86 | ○ |
| Example 14 | 10 | 3 | 1.5 | 2.22 | ○ |

The items shown in Table 1 are five items of "distance between PAM and NAM", "PAM thickness", "NAM thickness", "O/(P + Q)", and "determination" from the left. The units of the top three are "mm".

Here, in Table 1, "PAM" represents a positive active material layer, and "NAM" represents a negative active material layer. Therefore, the "distance between PAM and NAM" corresponds to the above-described distance between a positive active material layer 111b and a negative active material layer 112b placed in a position facing the positive active material layer 111b, and is represented by reference sign O in FIG. 1.

The "PAM thickness" is the thickness of the positive active material layer 111b, and is represented by reference sign P in FIG. 1. On the other hand, the "NAM thickness" is the thickness of the negative active material layer 112b, and is represented by reference sign Q in FIG. 1. Also in the above table, each reference sign is shown above the corresponding item.

In Table 1, a total of 21 examples of 14 Examples (Examples 1 to 14) and 7 Comparative Examples (Comparative Examples 1 to 7) for comparison to the Examples are given and determined. In Table 1, the "distance between PAM and NAM" is shown in ascending order from "1 mm" to "10 mm" from the top, and the thicknesses of the positive active material layer and the negative active material layer at each distance are appropriately changed.

Each of the above Comparative Examples is a case where the value of "O/(P + Q)" is "1.00 or less". In all of these Comparative Examples, a difference of 100 Å (angstroms) or more was observed in crystallite size between sites, and therefore all the determinations are "unsuitable".

On the other hand, the value of "O/(P + Q)" in each Example was between "1.20" and "2.86", and was determined as "suitable". That is, in all of these Examples, a difference of 100 Å (angstroms) or more was not observed in crystallite size between any sites.

As is clear from the above test results, in the bipolar lead-acid storage battery, the distance between the positive active material layer and the negative active material layer, and the thicknesses of the positive active material layer and the negative active material layer are set such that the value obtained by dividing the distance between a positive active material layer and a negative active material layer placed in a position facing the positive active material layer by the sum of the thickness of the positive active material layer and the thickness of the negative active material layer is 1.1 or more. Thereby, local use of active material during charging and discharging can be suppressed to achieve uniform use of active material in a cell. Further, even if unevenness in use of active material due to local use occurs, the unevenness can be tolerated by making such a setting, and therefore the life of the storage battery can be extended.

Although there are Examples in which the value of "O/(P + Q)" is a value of "2.50" or more, all of them are herein determined as "suitable" in relation to the Comparative Examples. However, as described above, a case where the value is a value of 2.50 or more is not preferable because the energy density per volume in the cell C is reduced due to an increase in the volume of the cell C.

### (Second embodiment)

Next, a second embodiment in the present invention is described. In the second embodiment, the same constituent elements as those described in the above first embodiment are denoted by the same reference signs, and a description of the same constituent elements is omitted because of redundancy.

Here, FIG. 2 is a cross-sectional view illustrating part of a structure of a bipolar lead-acid storage battery 100A according to the second embodiment of the present invention. In FIG. 2, only the portions of two bipolar plates 120 in the structure of the bipolar lead-acid storage battery 100 described in the first embodiment are extracted and illustrated. The structure of the bipolar lead-acid storage battery is similar to the bipolar lead-acid storage battery 100 described above except for the structure of the separator 13.

That is, in the bipolar lead-acid storage battery 100 in the first embodiment described above, the separator 113 included in the cell member 110 is formed of one sheet. On the other hand, in the bipolar lead-acid storage battery 100A in the second embodiment described below, the separator 113 is composed of a plurality of sheets.

Specifically, the separator in the second embodiment of the present invention is composed of two separators of a first separator 113A and a second separator 113B. In the following, when collectively describing these two separators, they are each referred to as a "separator 113" as above.

Each of the first separator 113A and the second separator 113B has a similar structure to the separator 130 described in the first embodiment, such as having a through hole 113a. However, among the surfaces constituting the separator 113, two surfaces of a surface to be in contact with the positive active material layer 111b or the negative active material layer 112b and a surface where adjacent separators 113 are in contact are formed to have different surface roughness.

That is, a surface with small surface roughness is a fine surface, and a surface with large surface roughness is a rough surface. In the following description, for convenience of description, a surface with small surface roughness is referred to as a "first surface", and a surface with large surface roughness is referred to as a "second surface". Therefore, each of the plurality of separators 113 has the first surface and the second surface with different surface roughness. The relationships among the first surface, the second surface, and the difference in surface roughness are merely for convenience, and a surface with large surface roughness can be referred to as the first surface, as a matter of course.

In the embodiment of the present invention, a surface where the separator 113 in the bipolar lead-acid storage battery 100A is in contact with the positive active material layer 111b or the negative active material layer 112b is the first surface with small surface roughness. Therefore, for example, in the case where the first separator 113A and the second separator 113B are provided as the separator 113, the first surfaces with small surface roughness of the separators are in contact with the positive active material layer 111b and the negative active material layer 112b.

In this case, the second surfaces with large surface roughness of the first separator 113A and the second separator 113B are placed in positions facing each other. Therefore, the second surface of the first separator 113A and the second surface of the second separator 113B are in contact with each other.

This point will now be described using FIG. 2. FIG. 2 is an enlarged cross-sectional view illustrating part of the structure of the bipolar lead-acid storage battery 100A according to the embodiment of the present invention in an enlarged manner. In the bipolar lead-acid storage battery 100A in FIG. 2, the first separator 113A and the second separator 113B, which are two separators, are provided. Of these, the first separator 113A is placed on the positive active material layer 111b side, and the second separator 113B is placed on the negative active material layer 112b side.

The first surface 113Aa of the first separator 113A is in contact with the positive active material layer 111b in a facing manner. On the other hand, the first surface 113Ba of the second separator 113B is in contact with the negative active material layer 112b in a facing manner. As a result, the second surface 113Ab of the first separator 113A and the second surface 113Bb of the second separator 113B are in contact with each other in a facing manner.

Although herein a description is given using an example in which two separators of the first separator 113A and the second separator 113B are provided as an example of a plurality of separators 113, the number of separators 113 is not limited to two, and may be, for example, three or more.

Also a case where one separator 113 is bent and placed between the positive active material layer 111b and the negative active material layer 112b is treated as the case where a plurality of separators 113 are provided. That is, for example, bending originally one separator 113 in half creates the same state as a case where two different separators are stacked. The bending in this case is performed such that the second surface with large surface roughness is on the inside. When bending is performed in this manner, the first surface with small surface roughness is exposed on the side exposed to the front, and the second surfaces are in contact with each other in a facing manner. Then, the first surfaces exposed to the front are in contact individually with the positive active material layer 111b and the negative active material layer 112b.

Also surface roughness was measured. For the measurement of surface roughness, an image acquired using an apparatus (MXB-2500 REZ) of Hirox Co., Ltd. was subjected to a 3D automatic tiling function of image processing software "HiroxRH-2000" of the same company, Hirox Co., Ltd. The separator to be measured was formed into a flat plate shape of 50 mm × 50 mm (= 250 mm²). The measurement magnification was set to 200 to 600 times, and the cut-off value (λc) was set to 8.0 to 0.8. At this time, the measurement magnification and the cut-off value are adjusted so that an appropriate measurement result can be obtained by paying attention to the relationship between "surface roughness" and "undulation". The measurement of the surface roughness of the separator in each of the present Examples and Comparative Examples was performed before the separator was impregnated with an electrolytic solution. However, the measurement may be performed after the separator is impregnated with an electrolytic solution, washed with water, and dried, or may be performed after the storage battery is disassembled to extract the separator and the separator is washed with water and dried.

As a result of this measurement, the ten-point average roughness (Rz) on a "fine" surface with small surface roughness is preferably 90 um or less, and more preferably 15 um or more and 90 um or less.

### (Examples)

The present invention will now be described more specifically by showing Examples and Comparative Examples. First, the configuration of a bipolar lead-acid storage battery used as each of Examples and Comparative Examples was set as follows.

That is, the configuration of the bipolar lead-acid storage battery used here is the same as the configuration of the bipolar lead-acid storage battery used in the Examples described in the above first embodiment except for the configuration of the separator.

In the separator in the bipolar lead-acid storage battery used in the Examples in the second embodiment, two separators are used, and the first surface and the second surface of the separators are arranged to be in contact with the positive active material layer and the negative active material layer. Specifically, the separators are as shown in Table 2 below.

**[Table 2]**

| | O | P | Q | | | |
|---|---|---|---|---|---|---|
| | Distance between PAM-NAM [mm] | PAM thickness [mm] | NAM thickness [mm] | O/(P+Q) | Stack image | Determination |
| Example 2 | 3 | 1.5 | 1 | 1.20 | + rough fine fine rough - | ○ |
| Example 15 | 3 | 1.5 | 1 | 1.20 | + fine rough rough fine - | ⊙ |
| Example 8 | 5 | 2 | 1 | 1.67 | + rough fine rough fine - | ○ |
| Example 16 | 5 | 2 | 1 | 1.67 | + fine rough rough fine - | ⊙ |
| Example 10 | 7.5 | 2 | 1 | 2.50 | + fine rough fine rough - | ○ |
| Example 17 | 7.5 | 2 | 1 | 2.50 | + fine rough rough fine - | ⊙ |

In Table 2, six Examples are shown. In all of these six Examples, the value of O/(P + Q) described in the first embodiment is 1.1 or more and 2.5 or less.

Among the six Examples, three Examples of "Example 2", "Example 8", and "Example 10" are Examples described in the first embodiment. That is, the setting values and the values of "O/(P + Q)" in these three Examples are as described using Table 1. Thus, the determination is similarly indicated as "o".

On the other hand, the remaining three of "Example 15" to "Example 17" are Examples newly performed as Examples in the second embodiment. However, "Example 15" is compared with "Example 2", "Example 16" is compared with "Example 8", and "Example 17" is compared with "Example 10". Therefore, the setting values indicated by reference signs O, P, and Q of "Example 15" to "Example 17" are the same as those of the three Examples of "Example 2", "Example 8", and "Example 10", respectively. Therefore, the values of "O/(P + Q)" in these newly performed Examples are the same as those of the three Examples of "Example 2", "Example 8", and "Example 10".

For the items shown in Table 2, an item of "stack image" is further provided in addition to the five items shown in Table 1, that is, "distance between PAM and NAM", "PAM thickness", "NAM thickness", "O/(P + Q)", and "determination". The units of the top three are "mm" as in Table 1.

The section of "stack image" described above indicates how the two separators are stacked between the positive active material layer and the negative active material layer. For example, in the case of "Example 2" shown at the top of Table 2, "+ rough fine fine rough -" is written in the section of "stack image". Here, "+" represents the positive active material layer, and "-" represents the negative active material layer. Four words of "rough" and "fine" are arranged between "+ (positive active material layer)" and "- (negative active material layer)".

"Rough" indicates a surface with large surface roughness, that is, the second surface in the above description. On the other hand, "fine" indicates a surface with small surface roughness, that is, the first surface in the above description. In these Examples, two separators are used as described above. Therefore, among the four words, the two words on the "+" side indicate the first surface and the second surface of a first separator, and the two words on the "-" side indicate the first surface and the second surface of a second separator.

That is, taking the case of Example 2 as an example, "+ rough fine fine rough -" is shown in the "stack image" of Table 2. This indicates that, of the two separators, a first separator placed on the positive active material layer side is placed such that the second surface with large surface roughness is in contact with the positive active material layer. On the other hand, it is indicated that a second separator placed on the negative active material layer side is placed such that the second surface with large surface roughness is in contact with the negative active material layer. Therefore, "rough" is shown on the right side of the writing of "+", and "rough" is shown on the left side of the writing of "-".

When two separators are arranged in this manner, the first surfaces of the two separators are placed in facing positions and are in contact with each other. That is, "fine" and "fine" of the two separators are in contact with each other. This is written in the "stack image" of Example 2. That is, two words of "fine" are shown side by side to be sandwiched between "rough" on the right side of the writing of "+" and "rough" on the left side of the writing of "-".

As described above, Example 2 and Example 15, Example 8 and Example 16, and Example 10 and Example 17 are paired Examples. In Example 2, Example 8, and Example 10, two separators are arranged such that a "rough" surface with large surface roughness is in contact with either or both of the positive active material layer and the negative active material layer. On the other hand, in all of the three Examples of Examples 15 to 17, "fine" surfaces with small surface roughness are in contact with both the positive active material layer and the negative active material layer.

That is, the paired Examples have the same conditions except for, regarding the two separators, which of a surface with small surface roughness and a surface with large surface roughness is in contact with the positive active material layer or the negative active material layer.

These three pairs of Examples, i.e., six kinds of Examples were subjected to the life test described in the first embodiment. Then, the crystallite size of βPbO₂ is found in various sites of the positive active material, and the differences are measured. The determination at this time is based on the premise that a difference of 100 Å (angstroms) or more is not observed in crystallite size between any sites.

That is, in Example 2, Example 8, and Example 10, as shown in Table 1, a difference of 100 Å (angstroms) or more is not observed in crystallite size between any sites. As described above, each pair of Example 2 and Example 15, Example 8 and Example 16, and Example 10 and Example 17 are different only in the arrangement of two separators. Therefore, a difference of 100 Å (angstroms) or more is not observed in any of the three Examples of Examples 15 to 17, either.

Thus, the results of Examples 15 to 17 were investigated on the basis of the results in Example 2, Example 8, and Example 10, and cases where still better results than the results in Example 2, Example 8, and Example 10 were obtained were determined as "O".

Referring to the "determination" shown in Table 2, when separators are arranged such that "fine" surfaces with small surface roughness are in contact with both the positive active material layer and the negative active material layer as in the three Examples of Examples 15 to 17, the determination is "8".

That is, for example, taking a pair of Examples of Example 2 and Example 15 as an example, when the "difference in crystallite size between before and after the test of Example 2" and the "difference in crystallite size between before and after the test of Example 15" are compared in magnitude relationship, Example 15 exhibited a smaller value. Thus, Example 15 was marked with "⊙" in the determination.

As is clear from the above test results, even under conditions where the distance between a positive active material layer and a negative active material layer placed in a position facing the positive active material layer, the thickness of the positive active material layer, and the thickness of the negative active material layer are the same, when a "fine" surface with small surface roughness is in contact with the positive active material layer and/or the negative active material layer, the surface pressure of the separator applied to the active material layer is made uniform, and thereby the usage rates in various sites of the separator are equalized. Therefore, in the bipolar lead-acid storage battery, local use of active material during charging and discharging can be suppressed to achieve uniform use of active material in a cell. Further, even if unevenness in use of active material due to local use occurs, the unevenness can be tolerated by making such a setting, and therefore the life of the storage battery can be extended.

Note that, as described above, in the embodiments of the present invention, a bipolar lead-acid storage battery has been described as an example. However, when the above description applies also to other storage batteries in which other metals are used instead of lead for current collectors, the application of the above description is not excluded, as a matter of course.

### Reference Signs List

- 100: bipolar lead-acid storage battery
- 110: cell member
- 111: Positive electrode
- 112: negative electrode
- 111a: positive lead foil
- 112a: negative lead foil
- 111b: positive active material layer
- 112b: negative active material layer
- 113: separator
- 113A: first separator
- 113B: second separator
- 120: bi-plate
- 121: substrate of bi-plate
- 121a: substrate of through hole
- 122: frame body of bi-plate
- 130: first end plate
- 131: substrate of first end plate
- 132: frame body of first end plate
- 140: second end plate
- 141: substrate of second end plate
- 142: frame body of second end plate
- 150: adhesive layer
- 160: conduction body
- 164: surface of leg (one facing surface)
- 170: cover plate
- C: cell (space for accommodating cell members)

## Claims

1. A bipolar storage battery comprising:
cell members arranged with spacing in a stacked manner, each of the cell members including a positive electrode including a positive current collector and a positive active material layer, a negative electrode including a negative current collector and a negative active material layer, and an electrolyte layer interposed between the positive electrode and the negative electrode; and
space-forming members forming a plurality of spaces individually accommodating the plurality of cell members, each of the space-forming members including a substrate and a frame body, the substrate covering at least one of a side of the positive electrode and a side of the negative electrode of the cell member, the frame body surrounding a side surface of the cell member,
wherein a value obtained by dividing a distance between the positive active material layer and the negative active material layer placed in a position facing the positive active material layer by a sum of a thickness of the positive active material layer and a thickness of the negative active material layer is 1.1 or more.

2. The bipolar storage battery according to claim 1, wherein the value is 2.5 or less.

3. The bipolar storage battery according to claim 1 or 2,
wherein the electrolyte layer includes a plurality of separators, and
each of the plurality of separators has a first surface and a second surface with different surface roughness, and surfaces in contact with the positive active material layer and the negative active material layer are each a surface with small surface roughness.

4. The bipolar storage battery according to any one of claims 1 to 3, wherein the positive current collector and the negative current collector are made of lead or a lead alloy.
